# FASCICULE DE BREVET EUROPEEN

(11) **EP 1 465 495 B1**
(45) Date de publication et mention de la délivrance du brevet: **14.05.2008**
(21) Numéro de dépôt: 02801149.2
(22) Date de dépôt: 18.12.2002
(51) Int. Cl.: A21D 13/00

(54) **PROCEDE DE CUISSON OU RECHAUFFAGE OU DECONGELATION ET/ OU CONDITIONNEMENT D' UN PRODUIT ALIMENTAIRE**
VERFAHREN ZUM GAREN ODER ERHITZEN ODER AUFTAUEN UND/ODER VERPACKEN EINES NAHRUNGSMITTELPRODUKTS
METHOD FOR COOKING OR HEATING OR THAWING AND/OR PACKAGING A FOOD PRODUCT

(30) Priorité: 18.12.2001 FR 0116362
(43) Date de publication de la demande: 13.10.2004
(73) Titulaire: Senaux, Jean-Michel, 9100 Thouars (FR)
(72) Inventeur: DELAS, Eric, F-75016 Paris (FR)
(74) Mandataire: Roger, Walter
(86) Numéro de dépôt international: PCT/FR2002/004424
(87) Numéro de publication internationale: WO 2003/051128

(56) Documents cités:
- EP-A- 0 194 780
- WO-A-02/21927
- WO-A-03/022059
- DE-U- 29 616 596
- FR-A- 2 549 697
- FR-A- 2 741 779
- FR-A- 2 791 527
- GB-A- 2 343 106
- GB-A- 2 350 104
- US-A- 2 243 137
- US-A- 4 601 237
- US-A- 5 253 565
- US-A- 5 298 273
- US-A- 6 013 300

## Description

L'invention concerne un procédé de cuisson ou réchauffage ou décongélation et/ou conditionnement d'un produit alimentaire, notamment en vue de la préparation d'une pizza prête à être consommée à la main, le produit alimentaire conditionné obtenu et l'élément de conditionnement pour la mise en oeuvre.

On sait que la cuisson traditionnelle des pizzas est obtenue au moyen d'un four à sole spécifique, relativement onéreux et encombrant, la pâte étant cuite par contact de la sole et les ingrédients étant cuits par la chaleur ambiante du four.

On connaît par FR 2 741 779 un produit alimentaire de type pizza dont la pâte de fond garnie est fermée par une pâte fine d'enveloppe cuite.

On connaît en outre par FR 2 791 527 un produit alimentaire de type pizza obtenu par repliage à chaud de la pâte garnie chaude et fermé par un cordon de pâte au niveau des bords.

On connait aussi par WO 02/21927 un produit alimentaire de type pizza obtenu par repliage d'une pâte garnie, pour consommation à la main.

Bien que ces produits soient cuits de façon traditionnelle, ils ne font pas apparaître à la présentation à la vente les éléments de garniture de pizza et peuvent ainsi être assimilés, étant fermés, à des produits de type chausson ou " calzone ".

Par ailleurs, on connaît les "paninis" réchauffés entre des plaques chaudes en contact avec la pâte de pain externe, les ingrédients internes étant enfermés, et qui nécessitent un temps de réchauffage relativement important, environ 4 à 5 minutes, pour chauffer suffisamment les ingrédients.

Enfin, on connaît par US-A-2 243 137 un dispositif pour la préparation d'un produit alimentaire consistant à cuire simultanément les deux faces de la pâte garnie du produit au moyen de deux plaques chaudes appliquées en opposition sur les dites faces, et à replier l'une sur l'autre les dites faces chaudes du produit. Néanmoins, il n'est pas prévu un prélèvement et conditionnement simultanés du produit pour sa consommation comme un sandwich.

L'invention vise à remédier à ces inconvénients et propose un nouveau procédé conforme à la revendication 1 pour cuire ou réchauffer ou décongeler et/ou conditionner un produit alimentaire.

Le dispositif de chauffage approprié au mode cuisson ou de réchauffage ou de décongélation peut être un four classique, un four à pizza traditionnel à sole, un dispositif de chauffage du type comprenant deux plaques chauffantes opposées à revêtement anti-adhérent, téflonisé ou émaillé, ou un four micro-ondes.

Ainsi, dans le cas d'un dispositif de chauffage à plaques chauffantes opposées, la face garnie du produit alimentaire est chauffée par une plaque chaude téflonisée (à revêtement de téflon) ou émaillée de manière à empêcher tout collage de la matière chauffée sur la plaque chaude. La face de fond du produit peut être chauffée par une plaque chauffée classique, en métal ou en céramique par exemple.

La pâte de fond peut être pourvue de rainures parallèles dans une portion médiane, distantes de l'épaisseur de pliage et facilitant ce dernier.

De préférence, l'élément support de conditionnement est pourvu de rebords latéraux et arrière à un format tel que la pâte introduite et conditionnée dépasse légèrement de son ouverture avant, permettant ainsi la consommation directe du produit alimentaire chaud ou de la pizza chaude.

Il résulte de cette disposition que la pâte garnie peut être présentée à la vente dans sa forme primitive non pliée, avec sa garniture, ouvrant ainsi le choix du consommateur, et laissant place à un éventuel rajout d'ingrédients de garniture, par exemple pour une pizza, olives ou huile d'olive ou huile piquante au choix du consommateur, et autres ingrédients, et c'est seulement dans une étape finale que le produit est conditionné à forme repliée proche d'un sandwich.

Ladite pâte garnie est avantageusement confectionnée à un format double du produit alimentaire ou de la pizza à obtenir, par exemple rectangulaire, circulaire, triangulaire etc...
En vue de la confection de produits alimentaires consommables à la main comme un sandwich, tels que les "paninis", croque-monsieur, hot-dogs etc... la pâte peut encore être constituée de deux secteurs de pâte disposés adjacents dans ledit dispositif de chauffage approprié ou entre les plaques chauffées du dispositif à plaques chauffantes opposées, dont au moins un secteur est garni, et aptes à être réunis après prélèvement et repliage.

Ladite pâte peut être cuite ou réchauffée ou décongelée par un dispositif de type gril de préférence à plaques téflonisées, ou au moins avec une plaque téflonisée ou émaillée de manière à empêcher tout collage de la pâte traitée.

Les plaques sont avantageusement perforées pour permettre la migration des vapeurs de cuisson ou réchauffage.

L'invention concerne également le produit alimentaire consommable à la main, notamment une pizza, obtenu par la mise en oeuvre du procédé précité, cuit ou réchauffé ou décongelé et conditionné ensuite dans un étui ou dans un élément de conditionnement plan repliable et replié de façon à permettre la consommation du produit à la main comme un sandwich sans perte de matière.

L'invention concerne en outre le dispositif de cuisson ou réchauffage ou décongélation pour la mise en oeuvre du procédé précité comportant deux plaques chauffées, dont l'une au moins est téflonisée ou émaillée, aptes à être appliquées en opposition sur la pâte garnie d'ingrédients, en dessous et au-dessus, les dites plaques étant éventuellement perforées pour permettre à une température d'environ 200 à 300°C la migration des vapeurs de cuisson ou réchauffage.

L'invention concerne également l'élément de conditionnement pour la mise en oeuvre du procédé précité, à base de papier cartonné ou autre matériau semi-rigide pour l'application alimentaire, présentant une face de prélèvement du produit alimentaire à conditionner, pourvu ou non de bords latéraux pour sa fermeture et de lignes de prépliages parallèles pour le repliement du produit après chauffage, réchauffage ou décongélation.

L'invention est illustrée ci-après à l'aide d'un exemple de réalisation de l'invention, en référence au dessin annexé, sur lequel les figures représentent :
La figure 1 est une vue en perspective d'une pâte garnie de pizza par exemple à la présentation à la vente ;
La figure 2 est une vue montrant la pâte garnie entre deux plaques téflonisées chaudes, prête à être cuite ou réchauffée ;
La figure 3 est une vue montrant la préhension de la pâte par l'élément de conditionnement ;
Les figures 4 et 5 montrent l'introduction de la pâte garnie chaude dans l'élément de conditionnement avant pliage ;
La figure 6 est une vue en perspective du produit pizza obtenu, replié et prêt à la consommation ; et
La figure 7 est une variante de réalisation de l'élément de conditionnement replié.

L'exemple de réalisation décrit ci-dessous concerne la réalisation d'une pizza, mais l'invention peut s'appliquer à tout produit alimentaire à base d'une pâte confectionnée en secteurs plans de format variable adapté à la préhension et apte à être repliée à chaud, voire au chauffage et conditionnement des "paninis", croque-monsieur, hot-dogs, chauffés ouverts et repliés ensuite par un élément de conditionnement pour leur consommation.

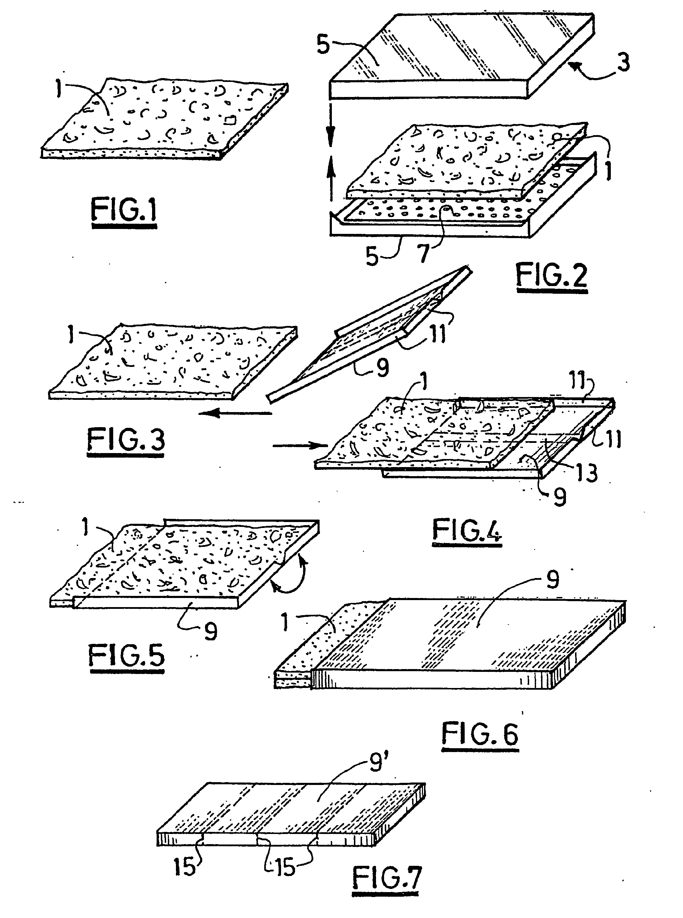

La pâte de pizza garnie 1 représentée à la figure 1 est confectionnée de façon classique, cuite ou précuite, étant destinée à être présentée à la vente, conservée au froid à environ 4°C, dans un magasin ou réservoir vitré adapté.

Cette pâte à pizza 1 garnie d'ingrédients pour pizza (sauce tomate, morceaux de jambon, champignon, fromage etc...), se présente sous forme d'une bande de faible épaisseur (3 à 6mm) et à un format -rectangulaire de par exemple 15cm de largeur et 20cm de longueur, en sorte de former après pliage longitudinal médian un ensemble consommable à la main de dimensions analogues à celles d'un sandwich.

Cette pâte garnie 1, cuite ou précuite, est destinée à être respectivement chauffée ou cuite juste avant sa consommation, au moyen d'un dispositif de chauffage 3, schématisé à la figure 2. Ce dispositif de chauffage peut se présenter comme un gril comportant deux éléments chauffants opposés 5 entre lesquels est disposée la pâte garnie 1. Chacun des éléments chauffants 5 est pourvu d'une plaque 7 téflonisée et perforée régulièrement en surface.

Cette plaque 7 est chauffée à 200-250°C pour le réchauffage et 250-300°C pour la cuisson, les vapeurs de cuisson ou de réchauffage pouvant migrer au travers de la plaque par les trous de perforation. La température de plaque est en fait régulée par un thermostat et adaptée à la nature des ingrédients et selon qu'il s'agit d'une cuisson ou d'un réchauffage ou d'une décongélation.

Les plaques téflonisées chaudes 7 sont appliquées à légère pression sur la pâte garnie. Le temps de chauffe est réduit, égal à environ 45 secondes, permettant justement cette étape finale de préparation à faible temps d'attente avant consommation.

Le revêtement de "téflon" des plaques empêche tout collage de la matière alimentaire.

Lorsque la pâte est cuite ou réchauffée, elle est prélevée au moyen d'un élément de conditionnement 9 représenté à la figure 3. Cet élément de conditionnement 9 à base de papier cartonné, de faible épaisseur, a une forme de pelle plane. Il est pourvu de rebords latéraux et arrière 11 et de deux lignes de pré-pliage parallèles 13 en partie longitudinale médiane.

Les lignes 13 sont espacées l'une de l'autre d'une distance correspondant sensiblement à l'épaisseur de la pâte 1 pliée prête à être consommée.

La largeur de l'élément de conditionnement est légèrement supérieure à celle de la pâte et sa longueur légèrement inférieure.

Cet élément de conditionnement est glissé comme une pelle selon flèche sous la pâte, celle-ci étant alors reçue jusqu'à son rebord arrière (voir les figures 4 et 5) où elle dépasse du bord avant d'environ le quart de sa longueur.

A ce moment, la pâte 1 et l'élément de conditionnement 9 peuvent être pliés manuellement ensemble selon flèche (figure 5) et suivant les lignes de pré-pliage 13 de l'élément de conditionnement. L'élément de conditionnement sert ainsi d'organe de prélèvement de la pâte, au pliage de celle-ci et enfin à son conditionnement pour sa consommation à la main comme un sandwich.

La pâte 1 est ainsi repliée sur elle-même longitudinalement, bord à bord, et de même l'élément de conditionnement 9 dont les rebords latéraux et arrière 11 viennent l'un sur l'autre respectivement ou à léger chevauchement de l'un à l'autre, fermant ainsi l'élément de conditionnement autour de la pâte (figure 6), sauf à sa partie avant, où celle-ci peut être consommée directement.

L'élément de conditionnement 9 tenu à la main peut être maintenu fermé entre les doigts ou peut être maintenu en position fermée par un dispositif de verrouillage de la fermeture adapté (non représenté), une simple languette ou crochet d'un rebord latéral amené à prise à la fermeture respectivement avec une découpe ou cavité complémentaire de l'autre rebord.

La pâte est tirée progressivement de son conditionnement tandis qu'elle est consommée.

Naturellement, le produit chaud plié peut aussi être introduit à partir de l'élément de conditionnement utilisé comme organe de prélèvement et pliage de la pâte, dans un étui autre adapté.

Une variante de réalisation de l'élément de conditionnement est représentée à la figure 7. Dans cette variante, l'élément de conditionnement 9' a une longueur légèrement supérieure à la pâte garnie et comporte en plus de la forme de conditionnement précitée des rebords de fermeture à l'avant, en sorte d'enfermer complètement la pâte garnie chaude dans sa forme repliée.

Cette variante permet de maintenir plus longtemps au chaud la pâte garnie. En outre, elle peut comporter des lignes de déchirure transversales 15 régulièrement disposées sur la longueur (1/3,1/2,2/3), par lesquelles sa partie avant peut être déchirée et ôtée au fur et à mesure de la consommation de la pâte.

Par ailleurs, l'élément de conditionnement peut avoir une autre forme que celle plane repliable, devant néanmoins être transformable en enveloppe fermée ou non.

Ainsi, il peut être conformé pour recevoir une pizza ronde classique, à replier sur elle-même bord à bord par ses faces de garniture, l'enveloppe de conditionnement présentant dans ces conditions un volume moindre que celui d'une pizza non repliée, avec l'économie de matériau correspondante et un maintien chaud de la pizza repliée plus long du fait de la moindre surface exposée de l'enveloppe de conditionnement.

On notera en outre que l'invention n'est pas limitée à l'exemple précité mais qu'elle est applicable à des produits alimentaires transformables à forme de sandwich, tels que les "paninis" les croques-monsieur, les hot-dogs etc..., chauffés ouverts et aptes à être conditionnés repliés par un élément de conditionnement transformable en enveloppe, tenu à la main pour la consommation comme un sandwich.

## Revendications

1. Procédé pour cuire ou réchauffer ou décongeler et/ou conditionner un produit alimentaire (1), notamment en vue de la préparation d'une pizza prête à être consommée à la main, **caractérisé en ce qu'**il consiste à cuire ou réchauffer ou décongeler simultanément les deux faces d'une pâte garnie de pizza (1), respectivement au moins précuite ou cuite, à un format approprié, la face de dessous de pâte et la face de dessus garnie, au moyen d'un dispositif de chauffage approprié au mode de cuisson, réchauffage ou décongélation.
- à glisser la pâte garnie chaude cuite ou réchauffée ou décongelée (1) dans un élément support de conditionnement pliable (9), sensiblement plan et audit format de la pâte, pourvu de rebords périphériques au moins latéraux et arrière (11), et
- à replier la pâte garnie chaude (1) dans son élément support de conditionnement (9), sur elle-même, sensiblement bord à bord de façon que les dits rebords (11) viennent en application l'un de l'autre fermant l'élément de conditionnement (9) comme un étui autour de la pâte repliée pour permettre après déchirement éventuel de l'élément de conditionnement la consommation à la main du produit alimentaire chaud sans risque de perte ou d'écoulement de garniture.

2. Procédé pour cuire ou réchauffer ou décongeler et/ou conditionner un produit alimentaire, selon la revendication 1, **caractérisé en ce que** le dispositif de chauffage approprié est un four à pizza classique.

3. Procédé pour cuire ou réchauffer ou décongeler et/ou conditionner un produit alimentaire, selon la revendication 1, **caractérisé en ce que** le dispositif de chauffage est du type comprenant deux plaques chauffantes opposées à revêtement anti-adhérent, téflonisé ou émaillé.

4. Procédé pour cuire ou réchauffer ou décongeler et/ou conditionner un produit alimentaire, selon la revendication 1, **caractérisé en ce que** le dispositif de décongélation est un four micro-ondes.

5. Procédé pour cuire ou réchauffer ou décongeler et/ou conditionner un produit alimentaire, selon l'une des revendications précédentes, **caractérisé en ce que** la pâte de fond est pourvue de rainures parallèles dans une portion médiane, distantes de l'épaisseur de pliage et facilitant ce dernier.

6. Procédé pour cuire ou réchauffer ou décongeler et conditionner un produit alimentaire, selon l'une des revendications précédentes, **caractérisé en ce que** ladite pâte garnie (1) est confectionnée à un format double du produit alimentaire ou de la pizza à obtenir, par exemple rectangulaire, circulaire, triangulaire.

7. Procédé pour cuire ou réchauffer ou décongeler et/ou conditionner un produit alimentaire, selon l'une des revendications précédentes, **caractérisé en ce que** la pâte est constituée de deux secteurs de pâte disposés adjacents, dont au moins un est garni, et aptes à être réunis après prélèvement et repliage.

8. Procédé de cuisson selon l'une des revendications précédentes, **caractérisé en ce que** la température du dispositif de chauffage est ajustée en fonction de la nature de la pâte et des ingrédients, et selon qu'il s'agit d'une cuisson ou d'un réchauffage ou d'une décongélation.

9. Procédé de cuisson selon l'une des revendications précédentes, **caractérisé en ce que** l'élément support de conditionnement (9) est pourvu de rebords latéraux et arrière (11) à un format tel que la pâte introduite et conditionnée dépasse légèrement de son ouverture avant, permettant ainsi la consommation directe du produit alimentaire ou de la pizza chaude.

10. Procédé de cuisson selon l'une des revendications précédentes, **caractérisé en ce que** l'élément support de conditionnement (9) est pourvu de rebords périphériques de fermeture, sur son pourtour, en vue d'enfermer la pâte garnie chaude (1) en position repliée.

11. Procédé de cuisson selon la revendication 10, **caractérisée en ce que** l'élément support de conditionnement comporte des lignes de déchirures (15) pour son ouverture avant consommation.

12. Elément de conditionnement pour la mise en oeuvre du procédé défini selon l'une des revendications 1-11, **caractérisé en ce qu'**il est à base de papier cartonné ou autre matériau semi-rigide pour l'application alimentaire, ayant une forme de pelle pourvue de rebords latéraux et arrière (11) présentant une face de prélèvement du produit alimentaire à conditionner en sorte qu'il est glissé comme une pelle sous la pâte pour la recevoir jusqu'à son bord arrière, et est pourvu de lignes de prépliage parallèles en partie longitudinale médiane pour permettre le repliement de la pâte contenue après chauffage, réchauffage ou décongélation et de l'élément de conditionnement, ensemble, selon les dites lignes de prépliage, l'élément de conditionnement étant tenu à la main, maintenu en position fermée pour contenir la pâte repliée comme un étui, ou fermé par un dispositif de verrouillage de la fermeture.

## Claims

1. A method of cooking or reheating or thawing and/or packaging a food product (1), in particular with a view to preparing a ready-to-eat, hand-held pizza, **characterised in that** it consists in simultaneously cooking or reheating or thawing the two faces of a respectively at least precooked or cooked topped pizza dough (1), of a suitable size, the two faces being the bottom face of the dough and the top face of the dough, by means of a heating device suitable for cooking, reheating or thawing,
- in sliding the hot, cooked or reheated or thawed topped dough (1) into a foldable packaging support element (9), which is substantially flat and of the same size as the dough and is provided with peripheral rims at least at the sides and rear (11), and
- in folding the hot topped dough (1) on itself in its packaging support element (9), substantially edge to edge in such a way that said rims (11) are applied one against the other closing the packaging element (9) like a case around the folded dough to allow the hot food product to be held in the hand and consumed after possible tearing of the packaging element without the risk of the topping being lost or slipping off.

2. A method of cooking or reheating or thawing and/or packaging a food product, according to claim 1, **characterised in that** the suitable heating device is a conventional pizza oven.

3. A method of cooking or reheating or thawing and/or packaging a food product, according to claim 1, **characterised in that** the heating device is of the type comprising two opposing heating plates with non-stick, Teflon or enamel coatings.

4. A method of cooking or reheating or thawing and/or packaging a food product, according to claim 1, **characterised in that** the thawing device is a microwave oven.

5. A method of cooking or reheating or thawing and/or packaging a food product, according to one of the preceding claims, **characterised in that** the base dough is provided with parallel grooves in a median portion, spaced by the fold thickness and facilitating folding.

6. A method of cooking or reheating or thawing and packaging a food product, according to one of the preceding claims, **characterised in that** said topped dough (1) is prepared to be double the size of the food product or pizza to be obtained, being for example rectangular, circular or triangular.

7. A method of cooking or reheating or thawing and/or packaging a food product, according to one of the preceding claims, **characterised in that** the dough consists of two adjacently arranged sectors of dough, at least one of which is topped and which are capable of being brought together after picking up and folding.

8. A method of cooking according to one of the preceding claims, **characterised in that** the temperature of the heating device is set as a function of the nature of the dough and the ingredients and in accordance with whether it is to be cooked or reheated or thawed.

9. A method of cooking according to one of the preceding claims, **characterised in that** the packaging support element (9) is provided with lateral and rear rims (11) and is of a size such that, after introduction and packaging therein, the dough extends slightly beyond the front opening thereof, thus allowing direct consumption of the food product or of the hot pizza.

10. A method of cooking according to one of the preceding claims, **characterised in that** the packaging support element (9) is provided with peripheral closing rims around its periphery, with a view to enclosing the hot, topped dough (1) in the folded position.

11. A method of cooking according to claim 10, **characterised in that** the packaging support element comprises tear lines (15) for opening prior to consumption.

12. A packaging element for carrying out the method defined according to one of claims 1-11, **characterised in that** it is made of paperboard or another semi-rigid material for food use, taking the form of a shovel provided with lateral and rear rims (11) and with a surface for picking up the food product to be packaged in such a way that it is slid like a shovel under the dough so as to receive the dough right up to its rear edge, and is provided with parallel prefold lines in the median longitudinal part to allow folding of the dough contained therein after heating, reheating or thawing together with the packaging element, along said prefold lines, the packaging element being held by hand in the closed position so as to contain the folded dough like a case, or closed by a device locking it closed.

## Patentansprüche

1. Verfahren, um ein Nahrungsmittel (1) zu kochen bzw. zu backen oder aufzuwärmen oder aufzutauen und/oder zuzubereiten, insbesondere im Hinblick auf die Zubereitung einer, aus der Hand verzehrbereiten, Pizza, **gekennzeichnet dadurch,**
**dass** es darauf beruht, dass die beiden Seiten eines als Pizza belegten Teigs (1), die Unterseite des Teigs und die belegte Oberseite, die jeweils, in einem geeigneten Format, zumindest vorgekocht bzw. vorgebacken oder gekocht bzw. gebacken sind, mit Hilfe eines geeigneten Heizgeräts, in der Betriebsart kochen bzw. backen, aufwärmen oder auftauen, gleichzeitig gekocht bzw. gebacken oder aufgewärmt oder aufgetaut werden;
- der heiße, gekochte bzw. gebackene oder aufgewärmte oder aufgetaute, belegte Teig (1) in ein, in etwa ebenen und im besagten Format des Teigs faltbaren Verpackungstragelement (9), ausgestattet mit zumindest seitlichen und hinterem, umlaufenden Rändern (11) geschoben wird, und
- der heiße, belegte Teig (1) in seinem Verpackungstragelement (9) auf sich selbst, in etwa Kante auf Kante, in der Art gefaltet wird, dass die Ränder (11), der Eine zu dem Anderen, in die Funktion kommen, das Verpackungstragelement (9), wie ein Futteral um den zusammengefalteten Teig zu schließen, um nach einem möglichen Zerreißen des Verpackungstragelements, den Verzehr des heißen Nahrungsmittels, ohne Risiko des Verlusts oder Verrutschen des Belags, aus der Hand, zu erlauben.

2. Verfahren gemäß Anspruch 1,um ein Nahrungsmittel zu kochen bzw. zu backen oder aufzuwärmen oder aufzutauen und/oder zuzubereiten, **gekennzeichnet dadurch, dass** das geeignete Heizgerät ein klassischer Pizzaofen ist.

3. Verfahren gemäß Anspruch 1, um ein Nahrungsmittel zu kochen bzw. zu backen oder aufzuwärmen oder aufzutauen und/oder zuzubereiten, **gekennzeichnet dadurch, dass** das Heizgerät von einem Typ ist, der zwei gegenüberliegende Heizplatten, mit einem nichthaftenden Belag teflonbeschichtet oder emailliert, umfasst.

4. Verfahren gemäß Anspruch 1, um ein Nahrungsmittel zu kochen bzw. zu backen oder aufzuwärmen oder aufzutauen und/oder zuzubereiten, **gekennzeichnet dadurch, dass** das Gerät zum Auftauen ein Mikrowellenofen ist.

5. Verfahren gemäß einem der vorangehenden Ansprüche, um ein Nahrungsmittel zu kochen bzw. zu backen oder aufzuwärmen oder aufzutauen und/oder zuzubereiten, **gekennzeichnet dadurch, dass** auf dem Boden des Teigs, in einem mittleren Bereich, parallele Rillen, im Abstand der Dicke der Faltung, vorgesehen sind und diese erleichtern.

6. Verfahren gemäß einem der vorangehenden Ansprüche, um ein Nahrungsmittel zu kochen bzw. zu backen oder aufzuwärmen oder aufzutauen und/oder zuzubereiten, **gekennzeichnet dadurch, dass** der belegte Teig (1) in einem doppelten Format wie das zu erlangende Nahrungsmittel oder die Pizza hergestellt ist, z.B. rechteckig, kreisrund oder dreieckig.

7. Verfahren gemäß einem der vorangehenden Ansprüche, um ein Nahrungsmittel zu kochen bzw. zu backen oder aufzuwärmen oder aufzutauen und/oder zuzubereiten, **gekennzeichnet dadurch, dass** der Teig in zwei nebeneinander liegenden Sektoren des Teigs ausgebildet ist, von denen mindestens einer belegt ist und die geeignet sind, nach der Entnahme und dem Zusammenklappen verbunden zu sein.

8. Koch- bzw. Backverfahren gemäß einem der vorangehenden Ansprüche, **gekennzeichnet dadurch, dass** die Temperatur des Heizgeräts entsprechend der Art des Teigs und der Zutaten eingestellt ist, und dem gemäß, ob es sich um ein Kochen bzw. Backen, ein Aufwärmen oder ein Auftauen handelt.

9. Koch- bzw. Backverfahren gemäß einem der vorangehenden Ansprüche, **gekennzeichnet dadurch, dass** das Verpackungstragelement (9) mit seitlichen und hinterem Rand (11), in einem Format, ausgestattet ist, so dass der eingeführte und abgepackte Teig leicht von seiner vorderen Öffnung vorsteht, um so den direkten Verzehr des Nahrungsmittels oder der heißen Pizza zu erlauben.

10. Koch- bzw. Backverfahren gemäß einem der vorangehenden Ansprüche, **gekennzeichnet dadurch, dass** das Verpackungstragelement (9) an seinem Umfang mit umlaufenden Verschlussrändern ausgestattet ist, um den belegten heißen Teig (1), in zusammengeklappter Stellung, einzuschließen.

11. Koch- bzw. Backverfahren gemäß dem Anspruch 10, **gekennzeichnet dadurch, dass** das Verpackungstragelement Aufreißlinien (15), für sein Öffnen vor dem Verzehr, aufweist.

12. Verpackungselement, das dafür eingesetzt wird, um ein Verfahren gemäß einem der Ansprüche 1-11 auszuführen, **gekennzeichnet dadurch, dass**
es aus dem Grundstoff eines kartonierten Papiers, oder eines anderen halbsteifen Materials, für Nahrungsmitteln ist,
es eine Schaufelform, ausgestattet mit seitlichen und hinterem Rändern (11), hat,
aufweisend eine Vorderseite, um das Nahrungsmittel zu entnehmen, und damit zu verpacken, dass es wie eine Schaufel, bis zum hinteren Rand, unter den Teig gleitet, um ihn aufzunehmen,
und mit parallelen, vorgefalteten Linien im mittleren längslaufenden Bereich ausgestattet ist, um das Einklappen des enthaltenen Teigs nach dem Erhitzen, dem Aufwärmen oder dem Auftauen, gemeinsam mit dem Verpackungselement entlang den vorgefalteten Linien zu erlauben, und das Verpackungselement beim in der Hand halten, einen geschlossenen Zustand aufrechterhält, um den zusammengefalteten Teig wie ein Futteral zu enthalten, oder durch einen Verriegelungsmechanismus des Verschlusses geschlossen ist.
